# EUROPEAN PATENT SPECIFICATION

(11) **EP 3 293 383 B1**
(45) Date of publication and mention of the grant of the patent: **15.04.2020**
(21) Application number: 17190603.5
(22) Date of filing: 12.09.2017
(51) Int. Cl.: F02C 6/08, B64D 13/02, B64D 13/08

(54) **STEPPED HIGH-PRESSURE BLEED CONTROL SYSTEM**
SYSTEM ZUR STEUERUNG DER GESTUFTEN HOCHDRUCKENTLÜFTUNG
SYSTÈME DE COMMANDE DE PURGE À HAUTE PRESSION À ÉTAGES

(30) Priority: 12.09.2016 US 201615262331
(43) Date of publication of application: 14.03.2018
(73) Proprietor: Hamilton Sundstrand Corporation, Charlotte, NC 28217 (US)
(72) Inventor: SMITH, Jason Frederick, West Hartford, CT 06107 (US); ERNST, Jeffrey, Wethersfield, CT 06109 (US)
(74) Representative: Dehns

(56) References cited:
- EP-A1- 0 511 935
- EP-A1- 2 955 334
- EP-A1- 3 002 431

## Description

### BACKGROUND

Gas turbine engines produce bleed air when operating. Bleed air is compressed air taken from the compressor stages of a gas turbine engine, and can be used for many other purposes in an aircraft, such as anti-icing, cabin pressurization, internal engine cooling or cabin environmental control systems. However, bleed air released directly from the compressor stages of a gas turbine engine must first be pressure and temperature conditioned before it is useful in other parts of the aircraft.

Typically, bleed air systems in aircraft regulate two types of bleed air: high-pressure bleed air from the high-pressure compressor stage of the gas turbine engine, and low-pressure bleed air from the low-pressure compressor stage of the gas turbine engine. Bleed air systems condition both types of bleed air through a combination of ducts, valves and regulators.

Previous bleed air systems included single-valve methods for regulating the pressure of incoming high-pressure bleed air. In such systems, a single valve was used to modulate the incoming high-pressure bleed air. The valve was either fully open or fully closed, and modulated according to system needs.

But these types of systems caused unstable conditions downstream in the bleed air system. This was caused by a substantial pressure difference in the high-pressure bleed air and the low-pressure bleed air, which resulted in valves downstream operating in unstable regions upon transitions. Moreover, severe transient conditions can cause an increase in system sizing, in addition to instability. Increased system sizing is required to handle the severe changes in boundary conditions such as pressure and temperature cycles that are placed on the hardware. Increased system sizing impacts weight and complexity of such systems, and decreases reliability of these systems. EP 3 002 431 A1 discloses an engine bleed air system having one or more taps for extracting air from the compressor section of an engine. EP 0 511 935 A1 discloses a gas turbine engine bleed air system that regulates the mixing of high-pressure and low-pressure air with a proportional value. EP 2 955 334 A1 discloses a method of operating a gas turbine engine to maintain the operation point of the gas turbine compressor within predetermined limits.

### SUMMARY

The invention is defined by independent claims 1 and 10. Preferred aspects of the invention are defined in the dependent claims.

### BRIEF DESCRIPTION OF THE DRAWINGS

FIG. 1 is a schematic diagram of a bleed air flow system in an aircraft.
FIG. 2 is a schematic diagram of a different embodiment of a bleed air flow system in an aircraft.

### DETAILED DESCRIPTION

The proposed bleed control system minimizes the impact of pressure differentials on downstream system stability by using a stepped pressure change instead of a completely open or completely closed valve system. Thus, there is no need to modulate the high-pressure bleed air coming into the bleed control system, and avoid pneumatic interactions of high-pressure bleed line and low-pressure bleed line valves. Transitioning between the high-pressure bleed line and low-pressure bleed line causes large temperature and pressure differentials. This can result in instability across the system

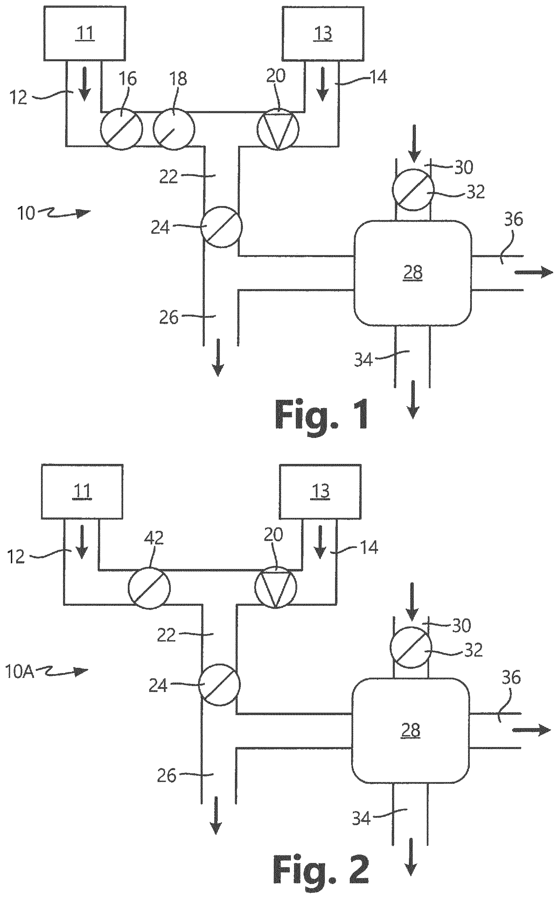

FIG. 1 is a schematic diagram of a bleed air flow system 10 in an aircraft. Bleed air flow system 10 includes high-pressure compressor (HPC) 11, high-pressure (HP) bleed line 12, low-pressure compressor (LPC) 13, low-pressure (LP) bleed line 14, first valve 16, second valve 18, check valve 20, bleed air junction 22, pressure or flow control valve 24, first outlet 26, heat exchanger 28, fan air line 30, fan air control valve 32, cold flow outlet 34, and hot flow outlet 36.

HP bleed line 12 is connected to first valve 16 and second valve 18 in series. LP bleed line 14 is connected to check valve 20. Both second valve 18 and check valve 20 are connected to bleed air junction 22. Bleed air junction 22 is connected to pressure or flow control valve 24. Pressure or flow control valve 24 is connected to first outlet 26 and heat exchanger 28. Fan line 30 is connected to fan air control valve 32, which is connected to heat exchanger 28. Heat exchanger 28 is also connected to cold flow outlet 34 and hot flow outlet 36. Once the air exits system 10 through outlets 24 or 26, it is routed to another use in the aircraft, such as an environmental control system.

When the system is in use, a high-pressure compressor 11 produces HP bleed air which travels through HP bleed line 12. HP bleed air must be temperature and pressure regulated before the HP bleed air is used elsewhere in the aircraft, because HP bleed air exits the high-pressure compressor 11 section of the engine at temperatures and pressures that are very high, making the air generally unusable elsewhere if it is completely unconditioned. System 10 provides for the pressure and temperature conditioning of the HP bleed air.

Thus, the HP bleed air is delivered through first valve 16. First valve 16 can be a butterfly valve, a ball valve, or a gate valve, and can be actuated by pneumatic, solenoid or electric forces. First valve 16 can be fully opened to allow flow of HP bleed air, or fully closed to halt flow of HP bleed air.

If first valve 16 is open, HP bleed air is able to flow to second valve 18. Second valve 18 can again be actuated by pneumatic, solenoid or electric forces. Second valve 18 can be a butterfly valve, a ball valve, or a gate valve. But second valve 18 can only be fully open or partially open. Second valve 18 permits flow in both the fully open and partially open positions. The amount of flow allowed by second valve 18 when it is in the "partially open" position is less than the flow allowed in the "fully open" position. The amount of flow allowed depends on the particular needs of the system. This creates a two-stage transition for the incoming HP bleed air within bleed air flow system 10 and eliminates the need to modulate incoming HP bleed air before it enters bleed air flow system 10.

While HP bleed air flows through HP bleed line 12, a low-pressure compressor 13 produces LP bleed air which travels through LP bleed line 14. LP bleed line 14 includes check valve 20. Check valve 20 prevents HP bleed air from rushing into LP bleed line 14. Instead, check valve 20 allows LP bleed air to pass through check valve 20 to bleed air junction 22, where LP bleed line 14 meets HP bleed line 12 and both streams of bleed air mix.

Bleed air junction 22 regulates incoming HP bleed air and incoming LP bleed air. Bleed air junction 22 can allow flow from either HP bleed line 12 or LP bleed line 14, depending on the settings of first valve 16, second valve 18, and check valve 20. Incoming bleed air (HP, LP or a mixture) then flows to pressure or flow control valve 24. Pressure or flow control valve 24 modulates the pressure and flow of the incoming bleed air. Pressure or flow control valve 24 can be actuated by pneumatic, solenoid, or electric forces. Pressure or flow control valve 24 can be a butterfly valve, a ball valve, or a gate valve. As the incoming bleed air flows through pressure or flow control valve 24, the pressure of the incoming bleed air is further regulated. Bleed air exiting pressure or flow control valve 24 can either be routed to outlet 26 or to heat exchanger 28 or both outlet 26 and heat exchanger 28. Different portions of bleed air can be routed to either outlet 26 or heat exchanger 28 depending on the needs of the aircraft system as a whole.

Outlet 26 is a pressure-conditioned, but not temperature-conditioned, outlet. Bleed air that is flown through outlet 26 is not temperature conditioned by heat exchanger 28, but its pressure has been adjusted through the multi-step valve system (*e*.*g*., valves 16, 28, 20 and 24). Outlet 26 leads to a downstream location, which can be an environmental control system, an anti-ice system, an inert gas system, a waste water pressurization system, another pneumatically-driven system and combinations thereof, depending on the needs of the aircraft. Only downstream systems which do not require temperature-conditioned bleed air are fed from this outlet.

When bleed air flows to heat exchanger 28, it can be temperature conditioned by heat exchanger 28. Heat exchanger 28 can be a plate-fin, shell-tube, or other appropriate type of heat exchanger for use in an aircraft bleed air condition system. Heat exchanger 28 includes two sides, a hot side and a cool side. The cool side of heat exchanger 28 is fed by cooling air coming through fan air line 30. Cooling air can be engine fan air, inducted air, forced air, ram air, or other types of cooling air. Cooling air stays in the cool side of heat exchanger 28, and does not mix with incoming bleed air. However, the cooling air allows heat exchanger 28 to temperature condition incoming bleed air before the cooled bleed air exits through conditioned air hot side outlet 34. Cooling air exits out conditioned cool side outlet 36. Conditioned air hot side outlet 34 leads to a downstream location, which can be an environmental control system, an anti-ice system, an inert gas system, a waste water pressurization system, another pneumatically-driven system and combinations thereof. In this instance, bleed air funneled through hot air side outlet 34 is temperature-conditioned, and can feed into systems which require temperature-regulated air.

The multi-step regulation of incoming HP bleed air mitigates severe pressure transient conditions and results in a less drastic pressure differential across the bleed air system as a whole. In particular, the multi-step valve system allows for a smaller pressure differential across pressure/flow control valve 24, which modulates bleed air downstream, before the bleed air is repurposed for other uses in the aircraft. This allows for better system stability and longevity across the aircraft operational envelope.

FIG. 2 is a schematic diagram of a bleed air flow system 10A in an aircraft. Bleed air flow system 10A includes HP bleed line 12, LP bleed line 14, multi-step valve 42, check valve 20, bleed air junction 22, pressure or flow control valve 24, first outlet 26, heat exchanger 28, fan air line 30, fan air control valve 32, cold flow outlet 34, and hot flow outlet 36. The components of bleed air flow system 10A are connected in the same manner, and function in the same way, as those in FIG. 1 except when otherwise noted.

Multi-step valve 42 of FIG. 2 is different than first and second valves 14, 16 in FIG. 1. Multi-step valve 42 replaces first and second valves 14, 16 by combining stepped regulation of incoming HP bleed air into one complex valve. Here, a high-pressure compressor 11 produces HP bleed air which enters bleed airflow system through HP bleed line 12, and then enters multi-step valve 42. Multi-step valve 42 can be actuated by pneumatic, electric or solenoid forces. Multi-step valve 42 contains a minimum of two steps, the first having a full open/full closed range, and the second having a full open/half open range. In this way, HP bleed air is regulated in a stepped manner similar to the system of FIG. 1 and maintains the same benefits.

The proposed bleed airflow system regulates pressure, flow and temperature of incoming HP bleed air in two or more steps. This method eliminates the needs to modulate incoming HP bleed air with an additional valve system. The method increases system stability and reliability by decreasing the pressure differential across the system and mitigating transient pressure conditions.

### Discussion of Possible Embodiments

The invention is defined by the following claims.

## Claims

1. A bleed airflow system for an aircraft comprising:
a high-pressure compressor (11);
a low-pressure compressor (13);
a high-pressure bleed line (12) configured to receive high-pressure bleed air from the high-pressure compressor, the high-pressure bleed line comprising a valve system (16, 18), the valve system configured to regulate the pressure of the high-pressure bleed air received from the high-pressure bleed line in at least two steps;
a low-pressure bleed line (14) configured to receive low-pressure bleed air from the low-pressure compressor, the low-pressure bleed line comprising a check valve (20);
a bleed air junction (22) in fluid connection with the high-pressure bleed line and the low-pressure bleed line, wherein the bleed air junction is downstream of the valve system and the check valve;
a control valve (24) configured to receive bleed air from the bleed air junction; and
an outlet line (26) configured to receive bleed air from the control valve and distribute bleed air to a location separate from the bleed airflow system;
wherein the valve system (16, 18) is **characterized by**:
a first valve (16), wherein the first valve can be opened fully or closed fully; and
a second valve (18), wherein the second valve can only be opened fully or opened partially,
such that flow through the second valve in a partially open position is less than the flow through the second valve in a fully open position.

2. The system of claim 1, wherein the valve system comprises a multi-step valve (42).

3. The system of claim 1or 2, wherein the outlet line is connected to a heat exchanger(28).

4. The system of claim 3, wherein the heat exchanger (28) is configured to regulate temperature of incoming bleed air.

5. The system of claim 4, wherein the heat exchanger is configured to receive cooling air.

6. The system of claim 4, wherein the heat exchanger (28) comprises a hot side outlet (36), wherein the hot side outlet leads to a downstream location selected from the group consisting of an environmental control system, an anti-ice system, an inert gas system, a waste water pressurization system, a pneumatically driven system and combinations thereof.

7. The system of any preceding claim, wherein the outlet is connected to a downstream location which is selected from the group consisting of an environmental control system, an anti-ice system, an inert gas system, a waste water pressurization system, a pneumatically driven system and combinations thereof.

8. The system of claim 1 or any claim dependent thereon, wherein at least one of the first and second valves is a butterfly valve, or wherein at least one of the first and second valves is a ball valve, or wherein at least one of the first and second valves is a gate valve.

9. A method for conditioning bleed air, comprising:
receiving high-pressure bleed air from a high-pressure compressor (11);
regulating flow of the high-pressure bleed air by delivering the high-pressure bleed air through a valve system (16, 18), the valve system configured to regulate air pressure in at least two steps;
receiving low-pressure bleed air from a low-pressure compressor (13);
delivering the low-pressure bleed air through a check valve (20);
combining high-pressure bleed air and low-pressure bleed air at a junction (22); and
regulating pressure of the combined flow of bleed air;
wherein regulating flow of the high-pressure bleed air is **characterized by**:
flowing the high-pressure bleed air through a first valve (16), wherein the first valve can only be opened fully or closed fully; and through a second valve (18), wherein the second valve can only be opened fully or opened partially,
such that flow through the second valve in a partially open position is less than the flow through the second valve in a fully open position.

10. The method of claim 9, wherein regulating flow of the high-pressure bleed air comprises flowing the high-pressure bleed air through a multi-step valve (42).

11. The method of claim 9 or 10, and further comprising:
temperature conditioning the pressure-conditioned air in a heat exchanger (28).

12. The method of claims 10 or 11 , further comprising delivering pressure regulated bleed air to a system selected from the group consisting of an environmental control system, an anti-ice system, an inert gas system, a waste water pressurization system, a pneumatically driven system and combinations thereof.

13. The method of claim 11, further comprising delivering the temperature conditioned and pressure regulated bleed air to a system selected from the group consisting of an environmental control system, an anti-ice system, an inert gas system, a waste water pressurization system, a pneumatically driven system and combinations thereof.

## Patentansprüche

1. Zapfluftsystem für ein Luftfahrzeug, umfassend:
einen Hochdruckverdichter (11);
einen Niederdruckverdichter (13);
eine Hochdruckentlüftungsleitung (12), die konfiguriert ist, um Hochdruckzapfluft von dem Hochdruckverdichter aufzunehmen, wobei die Hochdruckentlüftungsleitung ein Ventilsystem (16, 18) umfasst, wobei das Ventilsystem konfiguriert ist, um den Druck der Hochdruckzapfluft, die von der Hochdruckentlüftungsleitung aufgenommen wird, in mindestens zwei Schritten zu regeln;
eine Niederdruckentlüftungsleitung (14), die konfiguriert ist, um Niederdruckzapfluft von dem Niederdruckverdichter aufzunehmen, wobei die Niederdruckentlüftungsleitung ein Rückschlagventil (20) umfasst;
eine Zapfluftverbindungsstelle (22) in Fluidkommunikation mit der Hochdruckentlüftungsleitung und der Niederdruckentlüftungsleitung, wobei die Zapfluftverbindungsstelle dem Ventilsystem und dem Rückschlagventil nachgelagert ist; ein Regelventil (24), das konfiguriert ist, um Zapfluft von der Zapfluftverbindungsstelle aufzunehmen; und
eine Auslassleitung (26), die konfiguriert ist, um Zapfluft von dem Regelventil aufzunehmen und Zapfluft zu einer Stelle zu verteilen, die von dem Zapfluftsystem getrennt ist;
wobei das Ventilsystem (16, 18) durch Folgendes gekennzeichnet ist:
ein erstes Ventil (16), wobei das erste Ventil vollständig geöffnet oder vollständig geschlossen werden kann; und
ein zweites Ventil (18), wobei das zweite Ventil nur vollständig geöffnet oder teilweise geöffnet werden kann,
sodass der Strom durch das zweite Ventil in einer teilweise geöffneten Position kleiner ist als der Strom durch das zweite Ventil in einer vollständig geöffneten Position.

2. System nach Anspruch 1, wobei das Ventilsystem ein mehrstufiges Ventil (42) umfasst.

3. System nach Anspruch 1 oder 2, wobei die Auslassleitung mit einem Wärmetauscher (28) verbunden ist.

4. System nach Anspruch 3, wobei der Wärmetauscher (28) konfiguriert ist, um die Temperatur von ankommender Zapfluft zu regeln.

5. System nach Anspruch 4, wobei der Wärmetauscher konfiguriert ist, um Kühlluft aufzunehmen.

6. System nach Anspruch 4, wobei der Wärmetauscher (28) einen Auslass (36) an der warmen Seite umfasst, wobei der Auslass an der warmen Seite zu einer nachgelagerten Stelle führt, die aus der Gruppe ausgewählt ist, bestehend aus einem Umweltkontrollsystem, einem Vereisungsschutzsystem, einem Inertgassystem, einem System zur Druckbeaufschlagung von Abwasser, einem pneumatisch angetriebenen System und Kombinationen davon.

7. System nach einem der vorhergehenden Ansprüche, wobei der Auslass mit einer nachgelagerten Stelle verbunden ist, die aus der Gruppe ausgewählt ist, bestehend aus einem Umweltkontrollsystem, einem Vereisungsschutzsystem, einem Inertgassystem, einem System zur Druckbeaufschlagung von Abwasser, einem pneumatisch angetriebenen System und Kombinationen davon.

8. System nach Anspruch 1 oder einem davon abhängigen Anspruch, wobei mindestens eines des ersten und zweiten Ventils ein Drosselventil ist, oder wobei mindestens eines des ersten und zweiten Ventils ein Kugelventil ist, oder wobei mindestens eines des ersten und zweiten Ventils ein Schieberventil ist.

9. Verfahren zum Aufbereiten von Zapfluft, umfassend:
Aufnehmen von Hochdruckzapfluft von einem Hochdruckverdichter (11) ;
Regeln des Stroms der Hochdruckzapfluft, indem die Hochdruckzapfluft durch ein Ventilsystem (16, 18) abgegeben wird, wobei das Ventilsystem konfiguriert ist, um den Luftdruck in mindestens zwei Schritten zu regeln;
Aufnehmen von Niederdruckzapfluft von einem Niederdruckverdichter (13);
Abgeben der Niederdruckzapfluft durch ein Rückschlagventil (20);
Kombinieren von Hochdruckzapfluft und Niederdruckzapfluft an einer Verbindungsstelle (22); und
Regeln des Drucks des kombinierten Stroms von Zapfluft;
wobei das Regeln des Stroms der Hochdruckzapfluft durch Folgendes gekennzeichnet ist:
Strömen der Hochdruckzapfluft durch ein erstes Ventil (16), wobei das erste Ventil wobei das erste Ventil vollständig geöffnet oder vollständig geschlossen werden kann; und durch ein zweites Ventil (18), wobei das zweite Ventil nur vollständig geöffnet oder teilweise geöffnet werden kann,
sodass der Strom durch das zweite Ventil in einer teilweise geöffneten Position kleiner ist als der Strom durch das zweite Ventil in einer vollständig geöffneten Position.

10. Verfahren nach Anspruch 9, wobei das Regeln des Stroms der Hochdruckzapfluft das Strömen der Hochdruckzapfluft durch ein mehrstufiges Ventil (42) umfasst.

11. Verfahren nach Anspruch 9 oder 10, und ferner umfassend:
Temperieren der hinsichtlich des Druck aufbereiteten Luft in einem Wärmetauscher (28).

12. Verfahren nach Anspruch 10 oder 11, ferner umfassend das Abgeben von hinsichtlich des Drucks geregelter Zapfluft an ein System, das aus der Gruppe ausgewählt ist, bestehend aus einem Umweltkontrollsystem, einem Vereisungsschutzsystem, einem Inertgassystem, einem System zur Druckbeaufschlagung von Abwasser, einem pneumatisch angetriebenen System und Kombinationen davon.

13. Verfahren nach Anspruch 11, ferner umfassend das Abgeben der temperierten und hinsichtlich des Drucks geregelten Zapfluft an ein System, das aus der Gruppe ausgewählt ist, bestehend aus einem Umweltkontrollsystem, einem Vereisungsschutzsystem, einem Inertgassystem, einem System zur Druckbeaufschlagung von Abwasser, einem pneumatisch angetriebenen System und Kombinationen davon.

## Revendications

1. Système de débit d'air de purge pour un aéronef comprenant :
un compresseur à haute pression (11) ;
un compresseur à basse pression (13) ;
une conduite de purge à haute pression (12) configurée pour recevoir de l'air de purge à haute pression depuis le compresseur à haute pression, la conduite de purge à haute pression comprenant un système de vanne (16, 18), le système de vanne étant configuré pour réguler la pression de l'air de purge à haute pression reçu depuis la conduite de purge à haute pression dans au moins deux étages ;
une conduite de purge à basse pression (14) configurée pour recevoir de l'air de purge à basse pression depuis le compresseur à basse pression, la conduite de purge à basse pression comprenant une vanne anti-retour (20) ;
une jonction d'air de purge (22) en connexion fluidique avec la conduite de purge à haute pression et la conduite de purge à basse pression, dans lequel la jonction d'air de purge est en aval du système de vanne et de la vanne anti-retour ;
une vanne de commande (24) configurée pour recevoir de l'air de purge depuis la jonction d'air de purge ; et
une conduite de sortie (26) configurée pour recevoir de l'air de purge depuis la vanne de commande et distribuer de l'air de purge à un emplacement distinct du système de débit d'air de purge ;
dans lequel le système de vanne (16, 18) est **caractérisé par** :
une première vanne (16), dans lequel la première vanne peut être ouverte complètement ou fermée complètement ; et
une seconde vanne (18), dans lequel la seconde vanne peut être ouverte complètement ou ouverte partiellement,
de sorte que le débit à travers la seconde vanne dans une position partiellement ouverte est inférieur au débit à travers la seconde vanne dans une position complètement ouverte.

2. Système selon la revendication 1, dans lequel le système de vanne comprend une vanne à étages multiples (42).

3. Système selon la revendication 1 ou 2, dans lequel la conduite de sortie est reliée à un échangeur thermique (28).

4. Système selon la revendication 3, dans lequel l'échangeur thermique (28) est configuré pour réguler la température de l'air de purge entrant.

5. Système selon la revendication 4, dans lequel l'échangeur thermique est configuré pour recevoir de l'air de refroidissement.

6. Système selon la revendication 4, dans lequel l'échangeur thermique (28) comprend une sortie côté chaud (36), dans lequel la sortie côté chaud mène à un emplacement en aval sélectionné dans le groupe composé d'un système de régulation climatique, d'un système de dégivrage, d'un système de gaz inerte, d'un système de pressurisation des eaux usées, d'un système à entraînement pneumatique et de leurs combinaisons.

7. Système selon une quelconque revendication précédente, dans lequel la sortie est reliée à un emplacement en aval qui est sélectionné dans le groupe composé d'un système de régulation climatique, d'un système de dégivrage, d'un système de gaz inerte, d'un système de pressurisation des eaux usées, d'un système à entraînement pneumatique et de leurs combinaisons.

8. Système selon la revendication 1 ou une quelconque revendication dépendante de celle-ci, dans lequel au moins l'une des première et seconde vannes est une vanne papillon, ou dans lequel au moins l'une des première et seconde vannes est une vanne à bille, ou dans lequel au moins l'une des première et seconde vannes est un robinet-vanne.

9. Procédé de conditionnement d'air de purge, comprenant :
la réception d'air de purge à haute pression depuis un compresseur à haute pression (11) ;
la régulation du débit de l'air de purge à haute pression en acheminant l'air de purge à haute pression à travers un système de vanne (16, 18), le système de vanne étant configuré pour réguler la pression d'air dans au moins deux étages ;
la réception d'air de purge à basse pression depuis un compresseur à basse pression (13) ;
l'acheminement de l'air de purge à basse pression à travers une vanne anti-retour (20) ;
la combinaison d'air de purge à haute pression et d'air de purge à basse pression au niveau d'une jonction (22) ; et
la régulation de la pression du débit combiné d'air de purge ;
dans lequel la régulation du débit de l'air de purge à haute pression est **caractérisée par** :
la circulation de l'air de purge à haute pression à travers une première vanne (16), dans lequel la première vanne peut seulement être ouverte complètement ou fermée complètement ; et à travers une seconde vanne (18), dans lequel la seconde vanne peut seulement être ouverte complètement ou ouverte partiellement,
de sorte que le débit à travers la seconde vanne dans une position partiellement ouverte est inférieur au débit à travers la seconde vanne dans une position complètement ouverte.

10. Procédé selon la revendication 9, dans lequel la régulation du débit de l'air de purge à haute pression comprend la circulation de l'air de purge à haute pression à travers une vanne à étages multiples (42).

11. Procédé selon la revendication 9 ou 10, et comprenant en outre :
le conditionnement de température de l'air conditionné sous pression dans un échangeur thermique (28).

12. Procédé selon les revendications 10 ou 11, comprenant en outre l'acheminement d'air de purge à régulation de pression jusqu'à un système sélectionné dans le groupe composé d'un système de régulation climatique, d'un système de dégivrage, d'un système de gaz inerte, d'un système de pressurisation des eaux usées, d'un système à entraînement pneumatique et de leurs combinaisons.

13. Procédé selon la revendication 11, comprenant en outre l'acheminement de l'air de purge climatisé et à régulation de pression jusqu'à un système sélectionné dans le groupe composé d'un système de régulation climatique, d'un système de dégivrage, d'un système de gaz inerte, d'un système de pressurisation des eaux usées, d'un système à entraînement pneumatique et de leurs combinaisons.
